# EUROPÄISCHE PATENTANMELDUNG

(11) **EP 1 804 027 A1**
(43) Veröffentlichungstag der Anmeldung: **04.07.2007**
(21) Anmeldenummer: 06127208.4
(22) Anmeldetag: 27.12.2006
(51) Int. Cl.: G01C 21/36

(54) **Verfahren und Vorrichtung zur dreidimensionalen Darstellung einer Umgebung mit Strassen**

(30) Priorität: 30.12.2005 DE 102005063011
(71) Anmelder: ROBERT BOSCH GMBH, 70442 Stuttgart (DE); DENSO CORPORATION, Kariya-shi, Aichi-ken (JP)
(72) Erfinder: Adam, Andreas, 31137 Hildesheim (DE)
(74) Vertreter: Bee, Joachim

(57) **Zusammenfassung**

Bei einem Verfahren zur dreidimensionalen Darstellung einer Umgebung auf einem Display eines Navigationssystems, bei dem Straßen (S), Wege, Gleise und dergleichen in einzelne Abschnitte (A) zwischen Referenzpunkten (RP) unterteilt werden, ist zur Verbesserung der Abbildungsgenauigkeit auf dem Display vorgeschlagen, dass die Straßen (S) mit ihrer tatsächlichen Höhe über Grund dargestellt werden. Des Weiteren wird ein entsprechend ausgebildetes Navigationssystem angegeben.

## Beschreibung

### Technisches Gebiet

Die Erfindung betrifft ein Verfahren zur dreidimensionalen Darstellung einer Umgebung auf einem Display eines Navigationssystems, wobei Straßen, Wege, Gleise und dergleichen in einzelne Abschnitte zwischen Referenzpunkten unterteilt werden sowie ein Navigationssystem mit einem Display zur dreidimensionalen Darstellung einer Umgebung.

### Stand der Technik

Besonders bei Navigationssystemen, die fest in Kraftfahrzeuge eingebaut sind, erlangt die dreidimensionale Darstellung der Umgebung um das Kraftfahrzeug herum eine immer größere Bedeutung. Durch diese dreidimensionale Darstellung auf dem Display, vorzugsweise einem LCD-Bildschirm, kann dem Fahrer ein realistisches Bild der Umgebung vermittelt werden, wobei die zu befolgende Fahrtroute nicht nur akustisch in an sich bekannter Weise ausgegeben werden kann sondern auch optisch beispielsweise durch eine rote zu befolgende Fahrtlinie auf dem Display.

Bei bisher bekannten Navigationssystemen, die die Umgebung lediglich zweidimensional auf dem Display wiedergeben, wird ein Blick von quasi senkrecht oben auf die Erdoberfläche vermittelt. Hierzu sind Informationen über die Umgebung um die momentane Position des Kraftfahrzeugs in einem entsprechend ausgelegten Datenspeicher hinterlegt und werden zur Darstellung auf dem Display abgerufen.

Bei höherwertigen Navigationssystemen, die eine dreidimensionale Darstellung von schräg oben auf die Erdoberfläche erlauben, sind Straßen, Wege, Gleise, Flussverläufe und dergleichen derart in dem Datenspeicher hinterlegt, dass die Straßen in einzelne Abschnitte unterteilt sind, wobei jeder Abschnitt zwischen zwei benachbarten Referenzpunkten angeordnet ist. Somit müssen lediglich die Referenzpunkte im Datenspeicher hinterlegt werden sowie eine Information zu welchem benachbarten Referenzpunkt die Straße, das Gleis etc. weiterläuft. Gegebenenfalls kann noch eine Information bezüglich einer Farbe der Darstellung auf dem Display mit abgespeichert sein, um beispielsweise ein Flussverlauf blau und ein Gleis grau wiederzugeben. Mit dieser Darstellung von schräg oben, die auch als pseudodreidimensional oder vektoriell bezeichnet wird, kann ein relativ genaues Abbild der Umgebung um die Position des Kraftfahrzeugs, die in an sich bekannter Weise mit einer Positionsbestimmungseinrichtung festgestellt wird, wiedergegeben werden.

Als nachteilig hierbei ist es anzusehen, dass besonders bei Brücken, Autobahnkreuzen und dergleichen sich die Straßen, Wege und Schienen auf der Darstellung des Displays unmittelbar überkreuzen, so dass eine verfälschte Abbildung der realen Umgebung angezeigt wird. Dies kann zu Fehlinterpretationen durch einen Nutzer des Navigationssystems führen.

Ausgehend von diesem Stand der Technik liegt der Erfindung die Aufgabe zugrunde, ein Verfahren zur dreidimensionalen Darstellung einer Umgebung anzugeben, mit dem die wahren Straßenverläufe wiedergegeben werden können. Des Weiteren soll ein entsprechend ausgebildetes Navigationssystem geschaffen werden.

Diese Aufgaben werden durch die in den Ansprüchen 1 und 4 angegebenen Merkmale gelöst.

Der Kerngedanke der Erfindung besteht darin, dass Straßen, Flüsse, Wege, Gleise und dergleichen jeweils in an sich bekannter Weise in einzelne Abschnitte zwischen Referenzpunkten unterteilt sind und jedem der Referenzpunkte zusätzlich eine Information bezüglich der Höhe des Referenzpunktes über der Umgebung zugeordnet wird. Hierbei kann entweder die absolute Höhe über Grund beziehungsweise der benachbarten Umgebung als Information herangezogen werden oder eine Höhe des Referenzpunkts über Normalnull, wobei von diesem Wert die Höhe der unmittelbaren Umgebung des Referenzpunkts über Normalnull abgezogen werden muss.

Die absoluten Höhen der Referenzpunkte über der Umgebung, beispielsweise eine Brückenhöhe über einen Fluss oder ein Tal, können u.a. mit Hilfe stereografischer Aufnahmen der Umgebung ermittelt und in einen entsprechend ausgebildeten Datenspeicher des Navigationssystems eingelesen werden.

Es versteht sich, dass das Navigationssystem in an sich bekannter Weise über eine Positionsbestimmungseinrichtung, eine Routenberechnungseinheit und eine Zielführungseinrichtung verfügt. Zur realistischen Darstellung der Umgebung ist das Navigationssystem derart ausgelegt, dass die Höheninformation jedes Referenzpunkts, die zusätzlich im Datenspeicher hinterlegt ist, aus diesem ausgelesen und bei der dreidimensionalen Darstellung auf dem Display berücksichtigt werden kann. Hierzu kann von einem zentralen Steuergerät des Navigationssystems die Höhe des Referenzpunkts, also beispielsweise eine Brückenhöhe, durch eine entsprechende dreidimensionale Darstellung auf dem Display wiedergegeben werden.

Zusätzlich kann bei dieser Art der Darstellung auch berücksichtigt werden, ob am nächsten Referenzpunkt beispielsweise eines Straßenverlaufs dieser Referenzpunkt die gleiche Höhe über der Umgebung hat, wie der vorhergehende oder nicht. Hat der nächste Referenzpunkt eine andere Höhe über Grund, so deutet dies auf das Vorhandensein einer Brücke, Überführung, Auffahrtsrampe oder dergleichen hin. Haben benachbarte Referenzpunkte jeweils die gleiche Höhe über Grund deutet dies auf einen Bahndamm hin oder eine Straße verläuft durch eine Senke oder ein Tal.

Der Vorteil der Erfindung besteht darin, dass das zusätzliche Abspeichern einer Höheninformation für jeden Referenzpunkt eines Straßenverlaufs mit relativ geringem Speicheraufwand vorgenommen werden kann. Die nachfolgende dreidimensionale Darstellung eines Straßenverlaufs mit sich ändernden Höhen über Grund kann von einem entsprechend ausgelegten Steuergerät des Navigationssystems mit Hilfe einfacher trigonometrischer Berechnungen zur realistischen Wiedergabe auf dem Display ausgeführt werden. Insbesondere wenn eine zu befolgende Fahrtroute, die auf dem Display beispielsweise rot dargestellt wird, über eine Brücke oder über ein Autobahnkreuz verläuft ist mit dieser realistischen Darstellung eine realistischere Darstellung der tatsächlichen Umgebung um das Kraftfahrzeug herum gewährleistet, so dass die Gefahr einer Fehlinterpretation verringert ist.

Vorteilhafte Ausgestaltungen der Erfindung sind jeweils in den Unteransprüchen gekennzeichnet.

In den Ansprüchen 2 und 5 ist vorgeschlagen, dass jedem Referenzpunkt eine standardisierte Höhe über der Umgebung zugeordnet wird. Mit derartigen standardisierten Höhen, beispielsweise jeweils in 1m-Schritten, insbesondere jeweils in 6m- Schritten, ist der Speicherplatz zur zusätzlichen Abspeicherung von Höheninformationen des Referenzpunkts wesentlich reduziert, da hier lediglich ein numerischer ganzzahliger Wert zusätzlich abgespeichert werden muss. Eine derartige Auflösung beispielsweise in 1m- oder 6m-Schritten bietet auch bei großen Vergrößerungen der Darstellung auf dem Display noch eine ausreichende Genauigkeit, um die tatsächlichen Verhältnisse bei einer Straßenbrücke oder dergleichen wiederzugeben.

Insbesondere bei Autobahnkreuzen, Schienenüberführungen etc. wird jeder der beiden Straßen, Wege, Gleise jeweils eine Abbildungsreihenfolge zugeordnet, wie in den Ansprüchen 3 und 6 gekennzeichnet, um festzulegen, dass bei der Darstellung auf dem Display zuerst die unten liegende Straße gezeichnet wird und nachfolgend die diese überquerende darüber angeordnete. Somit ist die Detailtreue bei der Anzeige auf dem Display gewahrt.

Es versteht sich, dass im Vorhergehenden der Begriff Straße dahingehend zu verstehen ist, dass hierunter alle geradlinig verlaufenden, natürlichen oder künstlichen Gegebenheiten zu verstehen sind, also auch Gleise, Dämme, Auffahrrampen usw.

Voranstehend wurde die Erfindung im Wesentlichen im Zusammenhang mit einem Navigationssystem in einem Kraftfahrzeug beschrieben. Es ist jedoch ersichtlich, dass das Navigationssystem auch als mobiles Navigationssystem ausgelegt oder beispielsweise in ein Flugzeug eingebaut sein kann.

### Kurzbeschreibung der Zeichnungen

Eine Ausführungsform der Erfindung wird nachstehend anhand der Zeichnung näher erläutert. Es zeigt:

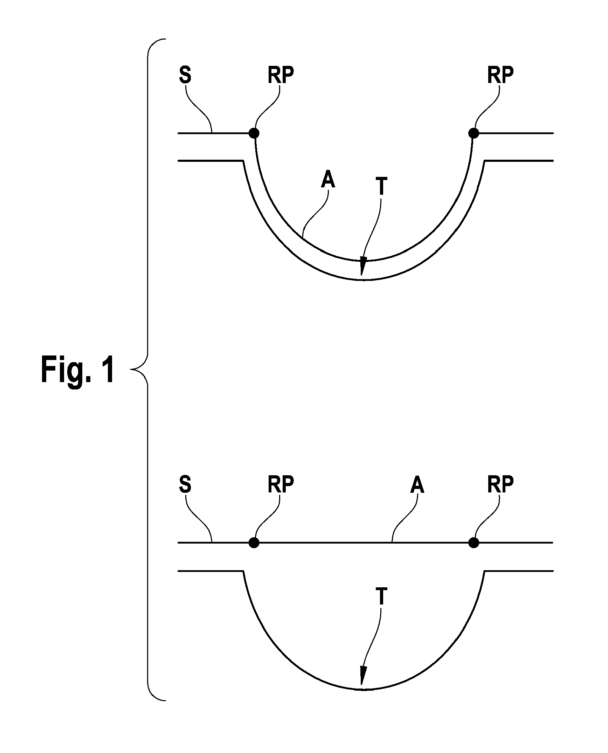

- Fig. 1:: zwei Beispiele eines Geländeverlaufs mit einer Straße.

### Bester Weg zur Ausführung der Erfindung

Aus der schematischen Darstellung in Figur 1 ist die grundsätzliche Vorgehensweise bei der Darstellung einer Umgebung mit einer beispielsweise ein Tal T überspannenden Straße S entnehmbar. Zur Verdeutlichung ist eine Querschnittsdarstellung gewählt und nicht eine vektoriell dreidimensionale.

Ein Straßenverlauf, der auf einem Display eines Navigationssystems in dreidimensionaler Weise dargestellt werden soll, ist hierzu in mehrere Abschnitte A unterteilt, die aneinander gereiht einen Polygonzug bilden, um von einem Nutzer des Navigationssystems als Straße, Gleise, Damm oder dergleichen, versehen mit den entsprechenden Einfärbungen, erkannt zu werden.

Bei bekannten Navigationssystemen, die in an sich bekannter Weise über eine Positionsbestimmungseinrichtung, eine Routenberechnungseinheit und eine Zielführungseinrichtung verfügen, werden Straßen als Bestandteil der Erdoberfläche bzw. der Umgebung um die Position des Kraftfahrzeugs herum, die durch die Cursorposition in der Mitte des Displays angegeben wird, dargestellt. Um hier einen realistischeren Eindruck der Umgebung zu vermitteln wird jedem Referenzpunkt RP eine Höheninformation zugeordnet, die die Höhe dieses Referenzpunkts RP über der Erdoberfläche bzw. über Normalnull angibt. Hierzu wird in dem Navigationssystem praktisch kaum zusätzlicher Speicherplatz benötigt, insbesondere wenn die Höheninformationen standardisiert, beispielsweise in 1m- oder 6m-Schritten, hinterlegt sind.

Zur Darstellung des Straßenverlaufs werden die benachbarten Referenzpunkte RP mit Abschnitten A des Straßenverlaufs derart miteinander verbunden, dass insbesondere bei unterschiedlichen Höhen benachbarter Referenzpunkte RP über der Umgebung der dazwischenliegende Abschnitt A derart auf dem Display wiedergegeben wird, dass er in schräger Richtung von oben nach unten von einem zum anderen Referenzpunkt RP verläuft. Die entsprechenden trigonometrischen Berechnungen zur Generierung eines Abschnitts A können in einfacher Weise von einem zentralen Steuergerät des Navigationssystems ausgeführt werden.

In dem in Figur 1 oben abgebildeten Ausführungsbeispiel ist dem Abschnitt A zusätzlich die Information zugeordnet, dass er stets einen gleichen Abstand zur Erdoberfläche bzw. zur Umgebung hat. Dies ist beispielsweise der Fall, wenn eine Straße durch eine Tal T hindurch verläuft und dieses nicht überspannt. Das Gegenteil ist in Figur 1 unten abgebildet, wobei die Straße A mit Hilfe einer hier zur Vereinfachung der Darstellung nicht abgebildeten Brücke ein Tal T überspannt, wobei zu beiden Seiten des Tals T jeweils ein Referenzpunkt RP angeordnet ist und zwischen diesen beiden Referenzpunkten RP ein Abschnitt A der Straße S das Tal T überspannt.

## Patentansprüche

1. Verfahren zur dreidimensionalen Darstellung einer Umgebung auf einem Display eines Navigationssystems, wobei Straßen (S), Wege, Gleise und dergleichen in einzelne Abschnitte (A) zwischen Referenzpunkten (RP) unterteilt werden, **dadurch gekennzeichnet, dass** die Straßen (S) mit ihrer tatsächlichen Höhe über Grund dargestellt werden.

2. Verfahren nach Anspruch 1, **dadurch gekennzeichnet, dass** jedem Referenzpunkt (RP) eine standardisierte Höhe zugeordnet wird.

3. Verfahren nach Anspruch 1 oder 2, **dadurch gekennzeichnet, dass** bei sich überkreuzenden Straßen (S) eine Abbildungsreihenfolge zugeordnet wird.

4. Navigationssystem mit einem Display zur dreidimensionalen Darstellung einer Umgebung, wobei Straßen (S), Wege, Gleise und dergleichen in einzelne Abschnitte (A) zwischen Referenzpunkten (RP) unterteilt sind, **dadurch gekennzeichnet, dass** die Straßen (S) mit ihrer tatsächlichen Höhe über Grund darstellbar sind.

5. Navigationssystem nach Anspruch 4, **dadurch gekennzeichnet, dass** jedem Referenzpunkt (RP) eine standardisierte Höhe zuordenbar ist.

6. Navigationssystem nach Anspruch 4 oder 5, **dadurch gekennzeichnet, dass** bei sich überkreuzenden Straßen (S) eine Abbildungsreihenfolge zuordenbar ist.
